# EUROPÄISCHE PATENTANMELDUNG

(11) **EP 4 270 573 A2**
(43) Veröffentlichungstag der Anmeldung: **01.11.2023**
(21) Anmeldenummer: 23169106.4
(22) Anmeldetag: 21.04.2023
(51) Int. Cl.: H01M 10/04, G01B 7/28, H01M 10/0585

(54) **VERFAHREN UND VORRICHTUNG ZUM DETEKTIEREN EINER KANTE BEI DER HERSTELLUNG EINES ZELLSTAPELS**

(30) Priorität: 28.04.2022 DE 102022110398
(71) Anmelder: VOLKSWAGEN AG, 38440 Wolfsburg (DE)
(72) Erfinder: Masuch, Steffen, 38114 Braunschweig (DE); Kraken, Mathias, 38102 Braunschweig (DE)
(74) Vertreter: Gulde & Partner

(57) **Zusammenfassung**

Die Erfindung betrifft ein Verfahren zum Detektieren einer Kante (20) einer Elektrode (13, 14, 16) oder eines Elektrodenbandes bei der Herstellung eines Zellstapels (10) oder eines Zellwickels für eine Batteriezelle. Das Verfahren umfasst mindestens folgende Schritte:
- Positionieren einer ersten Elektrode (13, 14, 16), einer ersten Baugruppe (54), welche mindestens eine erste Elektrode (13, 14, 16) umfasst, oder eines Elektrodenbandes auf einem Trägerelement (12) zum Aufbau eines Zellstapels (10) oder Zellwickels für ein Batteriezelle,
- Erfassen zumindest einer Kante (20) der Elektrode (13, 14, 16) durch eine zerstörungsfreie Prüfung mittels eines Wirbelstromsensors (28), wobei durch einen Anstieg der Impedanz (Im) beim Erfassen der Kante (20) eine Position der ersten Elektrode (13, 14, 16), der ersten Baugruppe (54), oder des Elektrodenbandes bestimmt wird.

Die Erfindung betrifft ferner eine Vorrichtung zum Detektieren einer Kante (20) einer Elektrode (13, 14, 16) bei der Herstellung eines Zellstapels (10) für eine Batteriezelle.

## Beschreibung

Die Erfindung betrifft ein Verfahren zum Detektieren einer Kante einer Elektrode bei der Herstellung eines Zellstapels für eine Batteriezelle sowie eine Vorrichtung zur Durchführung eines solchen Verfahrens gemäß dem Oberbegriff der unabhängigen Patentansprüche.

In der Batteriezellfertigung werden Anoden, Kathoden und Separatoren zu einem Zellstapel für die Batteriezelle zusammengefügt. Die Anoden und Kathoden müssen bei der Herstellung des Zellstapels mit einer hohen Genauigkeit und Geschwindigkeit positioniert und gestapelt werden. Hierfür wird bei bekannten Lösungen eine aufwendige und teure Kameratechnik verwendet, um den Prozess zu kontrollieren und zu überwachen. Die Geschwindigkeit des Verbundbildungsprozesses zur Herstellung des Zellstapels wird teilweise durch das Kamerasystem limitiert, da aufwändige Bildverarbeitungsprozesse und eine freie Sicht auf die Blattkanten der Elektroden für die Datenaufnahme und Prozesssteuerung nötig sind. Insbesondere erschwert auch eine oben liegende Separatorenschicht in dem Zellstapel einen Blick auf die durch diese Separatorenschicht verdeckte darunterliegende Elektrode.

Aus der WO 2019/211 278 A1 ist ein Verfahren zur Vermessung einer Elektrode zur Verwendung in einer Lithium-lonen-Batteriezelle bekannt, wobei die Elektrode mittels mindestens eines Wirbelstromsensors geprüft wird. Das Verfahren wird während der Produktion der Elektrode durchgeführt, um die Qualität der Elektrode zu prüfen und entsprechenden Ausschuss bei der Produktion zu erkennen, bevor die Elektrode in einem Zellstapel einer Batteriezelle verbaut wird.

Die WO 2021/034 178 A1 offenbart einen Wirbelstromsensor zur zerstörungsfreien Prüfung einer Batteriezelle. Der Wirbelstromsensor umfasst eine Kerneinheit, in welcher eine stromleitende Spule um einen magnetischen Kern gewickelt ist und ein Gehäuse zum Aufnehmen der Kerneinheit. Dabei sind zwei Kerneinheiten und zwei Gehäuse des Wirbelstromsensors derart angeordnet, dass die Mittelachse der Spule in der Dickenrichtung der Batteriezelle orientiert ist. Der in der WO 2021/034 178 A1 beschriebene Wirbelstromsensor ermöglicht eine Ein-Punkt-Erfassung, wodurch die Fähigkeit zur Risserfassung ohne einen Nichtprüfbereich verbessert wird, während er eine hohe Erfassungsauflösung aufweist.

Ferner ist aus der EP 3 835 778 A1 eine Vorrichtung zum Erkennen eines Risses in einer Batteriezelle unter Verwendung eines Wirbelstromsensors bekannt. Der Wirbelstromsensor umfasst eine Inspektionseinheit, die einen ersten Sensor zum Induzieren eines Wirbelstroms und einen zweiten Sensor zum Erfassen eines Signals des durch den ersten Sensor induzierten Wirbelstroms aufweist. Die Vorrichtung umfasst eine Transfereinheit zum sequentiellen Transfer einer Vielzahl von Batteriezellen von einem Punkt, an dem die Batteriezellen eingeführt werden, zu einem Punkt, an dem die Batteriezellen entnommen werden und eine Steuereinheit, die elektrisch mit der Prüfeinheit verbunden ist und das von der Prüfeinheit erfasste Wirbelstromsignal empfängt, auswertet und steuert. Mit der in der EP 3 835 778 A1 beschriebenen Vorrichtung zur Risserkennung in einer Batteriezelle können das Vorhandensein und die Lage von Rissen, die an einer Elektrode, einer Elektrodenzunge und einer Schweißeinheit entstehen, zerstörungsfrei erkannt werden.

Der Erfindung liegt nun die Aufgabe zugrunde, die Lageerkennung und Positionierung von einer Elektrode oder Baugruppen, welche mindestens eine Elektrode umfassen, bei der Herstellung eines Zellstapels zu verbessern und die Herstellung eines Zellstapels zu erleichtern.

Die Aufgabe wird durch ein Verfahren zum Detektieren einer Kante einer Elektrode oder eines Elektrodenbandes bei der Herstellung eines Zellstapels oder eines Zellwickels für eine Batteriezelle gelöst, welches folgende Schritte umfasst:
- Positionieren einer ersten Elektrode, einer ersten Baugruppe, welche mindestens eine erste Elektrode umfasst, oder eines Elektrodenbandes auf einem Trägerelement zum Aufbau eines Zellstapels oder Zellwickels für ein Batteriezelle,
- Erfassen zumindest einer Kante der Elektrode durch eine zerstörungsfreie Prüfung mittels eines Wirbelstromsensors, wobei durch einen Anstieg der Impedanz (Im) beim Erfassen der Kante eine Position der ersten Elektrode, der ersten Baugruppe oder des Elektrodenbandes bestimmt wird.

Durch das Verfahren können Kanten von Elektroden bei der Herstellung eines Zellstapels für eine Batteriezelle auf einfache Art und Weise erkannt werden und somit die Positionierung einer Elektrode oder eine Baugruppe, welche eine Elektrode umfasst, erleichtert werden. Gegenüber Kamerasystemen bietet das vorgeschlagene Verfahren den Vorteil, dass auch durch Separatoren verdeckte Kanten erfasst werden können. Sofern nachfolgend vereinfacht nur Elektroden genannt werden, sollen hiermit auch Baugruppen, welche mindestens eine Elektrode umfassen, oder Elektrodenbänder umfasst sein. Da bei der Herstellung eines Zellstapels die Anoden und Kathoden in der Regel durch einen dazwischen angeordneten Separator getrennt sind, ermöglicht das vorgeschlagene Verfahren eine entsprechende Erleichterung, wodurch der Prozess insgesamt schneller und mit geringerer Fehlerquelle durchgeführt werden kann. Dadurch können die Herstellung des Zellstapels beschleunigt und die damit verbundenen Kosten reduziert werden. Zudem benötigt ein Wirbelstromsensor im Vergleich zu einem Kamerasystem weniger Bauraum und kann auf einfache Art und Weise in bestehende Maschinenteile bei der Herstellung des Zellstapels integriert werden. Zudem ist für die Erkennung der Bauteilposition bei einem Kamerasystem ein kurzfristiger Stillstand der zu stapelnden Komponenten notwendig. Demgegenüber hat das vorgeschlagene Verfahren den Vorteil, dass kein Stillstand notwendig ist, da der Wirbelstromsensor ohnehin eine Relativbewegung voraussetzt oder während des Handlings der Elektrode eine Messung zur Kantenerkennung durchführt.

Durch die in den abhängigen Ansprüchen aufgeführten Merkmale sind vorteilhafte Weiterentwicklungen und Verbesserungen des im unabhängigen Anspruch aufgeführten Verfahrens zum Detektieren einer Kante einer Elektrode bei der Herstellung eines Zellstapels für eine Batteriezelle möglich.

In bevorzugter Ausgestaltung der Erfindung ist vorgesehen, dass eine zweite Elektrode auf die erste Elektrode oder eine zweite Baugruppe, welche mindestens eine zweite Elektrode umfasst, auf die erste Baugruppe gelegt wird und eine erste Kante an der ersten Elektrode oder der ersten Baugruppe und eine zweite Kante an der zweiten Elektrode oder der zweiten Baugruppe erfasst werden, wobei aus den bestimmten Positionen der erfassten Kanten eine relative Position der ersten Elektrode zur zweiten Elektrode oder der ersten Baugruppe zur zweiten Baugruppe bestimmt wird. Dadurch kann auf besonders einfache Art und Weise ein Stapelprozess von Elektroden und Separatoren bei der Herstellung eines Zellstapels gesteuert werden.

Besonders bevorzugt ist dabei, wenn zwischen der ersten Elektrode und der zweiten Elektrode oder zwischen der ersten Baugruppe und der zweiten Baugruppe ein Separator angeordnet wird. Um eine elektrische Trennung zwischen der Anode und der Kathode zu erreichen und betriebssicher einen Kurzschluss in der Batteriezelle zu vermeiden, werden in dem Stapelprozess zwischen die Anoden und die Kathode jeweils Separatoren gestapelt. Da die Separatoren aber bezüglich der Form und Lage höhere Toleranzen als die Elektroden aufweisen, ist das vorgeschlagene Verfahren besonders vorteilhaft, da der Separator keinen Einfluss auf die Erkennbarkeit einer unter dem Separator liegenden Kante der Elektrode hat.

Ein weiterer Teilaspekt der Erfindung betrifft eine Vorrichtung zum Detektieren einer Kante einer Elektrode oder eines Elektrodenbandes bei der Herstellung eines Zellstapels für eine Batteriezelle. Die Vorrichtung umfasst mindestens eine Sensoranordnung mit mindestens einem Wirbelstromsensor zum Detektieren einer Kante einer Elektrode, einer ersten Baugruppe, welche mindestens eine erste Elektrode umfasst, oder eines Elektrodenbandes sowie ein Steuergerät mit einer Speichereinheit und einer Recheneinheit sowie einem in der Speichereinheit abgelegten maschinenlesbaren Programmcode. Das Steuergerät ist dazu eingerichtet, ein solches Verfahren durchzuführen, wenn der maschinenlesbare Programmcode durch die Recheneinheit ausgeführt wird. Die Vorrichtung umfasst ein Messmittel, welches durch das Wirbelstromprinzip die Lage und Position einer Elektrodenkante bestimmen kann. Für eine Wirbelstromprüfung muss das zu untersuchende Material elektrisch leitend sein. Dies trifft sowohl für eine Kathode als auch für eine Anode des Zellstapels, nicht jedoch für einen dazwischen liegenden Separator zu. Ein primäres Magnetfeld, welches durch einen Wechselstrom in einer Quellspule erzeugt wird, induziert in dem elektrisch leitenden Prüfmaterial, also in der Elektrode bzw. dem Elektrodenband, einen Strom. Dieser Wirbelstrom in der Elektrode erzeugt wiederum ein magnetisches Feld, welches dem primären Magnetfeld des Wirbelstromsensors entgegenwirkt. Daraus resultiert eine Schwächung des primären Magnetfelds des Wirbelstromsensors. Das aus der Differenz resultierende magnetische Feld erzeugt wiederum in einer Sensorspule des Wirbelstromsensors einen elektrischen Strom. Das Messergebnis basiert auf der Analyse des komplexen Wechselstromwiderstands, welche auch als Impedanz bezeichnet wird. Die Impedanz ist abhängig von der Wechselstromfrequenz der Quellspannung, den geometrischen, elektrischen und magnetischen Eigenschaften der Elektrode und der Messanordnung. Die Impedanz berechnet sich aus dem Imaginär- und Realteil des Widerstands. Das vorgeschlagene Verfahren und die Vorrichtung sind somit für die Erkennung von Kanten an Anoden und Kathoden zielführend. Wird ein Wirbelstromsensor über die Elektrodenkante geführt, kann diese sehr einfach und genau durch das beschriebene Messprinzip detektiert werden. Theoretisch sind Auflösungen mit einer Genauigkeit von +/-50 µm möglich. Somit kann die Kante und damit verbunden die Position der Elektrode sehr exakt bestimmt werden.

In einer bevorzugten Ausgestaltung der Vorrichtung ist vorgesehen, dass die Sensoranordnung eine Mehrzahl an Wirbelstromsensoren zur Erfassung mindestens zweier Kanten der Elektrode bzw. des Elektrodenbandes umfasst. Durch das Erfassen von zwei Kanten, vorzugsweise von zwei orthogonal zueinander verlaufenden Kanten der Elektrode, der Baugruppe oder des Elektrodenbandes, kann die Position der Elektrode exakt bestimmt werden. Dies erleichtert die Herstellung des Zellstapels und somit die Fertigung einer Batteriezelle.

Gemäß einer bevorzugten Ausgestaltung der Vorrichtung ist vorgesehen, dass die Sensoranordnung vier Wirbelstromsensoren umfasst, wobei die Wirbelstromsensoren derart angeordnet sind, dass sie zumindest die Eckpunkte der Elektrode oder des Elektrodenbandes erfassen. Durch das Erfassen der Eckpunkte kann die Lage der Elektrode bzw. des Elektrodenbandes bestimmt werden, wodurch der Stapelprozess beim Herstellen eines Zellstapels für eine Batteriezelle erleichtert wird.

In einer besonders bevorzugten Ausgestaltung der Vorrichtung ist vorgesehen, dass die Sensoranordnung acht Wirbelstromsensoren umfasst, wobei die acht Wirbelstromsensoren jeweils vier Sensor-Paarungen ausbilden, wobei jede Sensor-Paarung einen ersten Sensor zur Erfassung einer ersten Kante und einen zweiten Sensor zur Erfassung einer senkrecht zur ersten Kante verlaufenden zweiten Kante aufweist. Durch das Erfassen von jeweils zwei Kanten an vier verschiedenen Positionen der Elektrode bzw. des Elektrodenbandes kann die Position besonders exakt bestimmt werden. Insbesondere können durch acht Wirbelstromsensoren, welche jeweils vier Sensor-Paarungen ausbilden die Länge, Höhe und Breite der Elektrode bzw. des Elektrodenbandes bestimmt werden sowie ein Winkel zwischen den Seiten der Elektrode bzw. des Elektrodenbandes und die Lage des Schwerpunkts berechnet werden. Dadurch kann ein Stapelprozess zur Herstellung eines Zellstapels besonders exakt gesteuert werden.

In einer vorteilhaften Ausgestaltung der Vorrichtung ist vorgesehen, dass die Sensoranordnung relativ zu der Elektrode bzw. relativ zu dem Elektrodenband oder relativ zu der Baugruppe verschiebbar ist. Um die Kanten der Elektrode zu erfassen, kann es vorteilhaft sein, wenn die Sensoranordnung relativ zu der Elektrode oder der die Elektrode umfassenden Baugruppe verschiebbar ist. Durch eine Relativbewegung der Sensoranordnung zur Elektrode können die Kanten der Elektrode erkannt und somit die Position der Elektrode besonders exakt bestimmt werden.

Alternativ ist mit Vorteil vorgesehen, dass die Sensoreinheit ortsfest angeordnet ist und sich die Elektrode relativ zu der Sensoranordnung bewegt. Durch eine Relativbewegung der Elektrode zu der Sensoranordnung taucht die Elektrode in das von der Sensoranordnung ausgebaute Magnetfeld ein, wobei die Kanten der Elektrode erkannt werden und somit die Position der Elektrode bestimmt werden kann.

Alternativ ist mit Vorteil vorgesehen, dass die Sensoranordnung ein Array mit mehreren Wirbelstromsensoren, vorzugsweise mit mindestens vier Wirbelstromsensoren, besonders bevorzugt mit mindestens neun Wirbelstromsensoren umfasst. Durch ein Array an Wirbelstromsensoren kann eine Kante einer Elektrode bzw. des Elektrodenbandes ebenfalls funktionssicher bei der Herstellung eines Zellstapels erkannt werden. Dabei sind vorzugsweise vier Arrays vorgesehen, welche derart angeordnet sind, dass sie jeweils eine Ecke der zu stapelnden Elektroden überwachen und in diesem Eckbereich die beiden Kanten der Elektrode bzw. des Elektrodenbandes erfassen. Vorzugsweise ist das Array ortsfest angeordnet, sodass die Ecken der Elektroden des herzustellenden Zellstapels erfasst werden und die Lage der Elektroden relativ zu der im Zellstapel darunterliegenden Elektrode bestimmt werden kann. Dabei können bei einer Array-Anordnung auch die Sendeeinheit und die Empfangseinheit des Wirbelstromsensors getrennt voneinander angeordnet sein. Insbesondere kann eine Sendeeinheit oberhalb des Zellstapels und eine Empfangseinheit unterhalb des Trägerelements, auf welchem der Zellstapel errichtet wird, angeordnet sein.

In einer besonders bevorzugten Ausgestaltung der Vorrichtung ist vorgesehen, dass die Wirbelstromsensoren des Arrays in einer Matrixanordnung, vorzugsweise in einer drei mal drei Matrixanordnung, angeordnet sind. Durch eine Anordnung der Wirbelstromsensoren in einer Matrixanordnung kann eine entsprechend hohe Auflösung im Bereich der Eckpunkte der Elektrondenkanten erreicht werden, so dass eine genaue Lagebestimmung der jeweiligen Elektrode möglich ist. Dadurch wird ein besonders einfaches und schnelles Stapeln der Elektroden möglich.

Alternativ ist mit Vorteil vorgesehen, dass die Wirbelstromsensoren des Arrays in einer Sternanordnung angeordnet sind. Eine Sternanordnung der Wirbelstromsensoren ist eine weitere Möglichkeit, um zwei orthogonal zueinander verlaufende Kanten der Elektrode im Bereich der Ecken der Elektroden zu erfassen und somit die Position der Elektrode zu bestimmen. Dabei sind die Sensorelemente ausgehend von einem ersten Sensor strahlenförmig angeordnet und decken ähnlich wie bei der Matrixanordnung einen Bereich um den Eckpunkt der Elektrode ab, um die Position der Kanten zu detektieren.

Der Wirbelstromsensor ist vorzugsweise als Totalreflexionssensor ausgeführt.

Bei der Herstellung eines Zellstapels für eine Batteriezelle ist die Sensoranordnung vorzugsweise in einen Niederhalter zur Fixierung des Zellstapels integriert. Dabei fixiert der Niederhalter eine Elektrode, welche an der obersten Position des Zellstapels angeordnet ist. In einem nächsten Verfahrensschritt wird dann ein Separator auf den Zellstapel aufgebracht, der durch ein anderes Niederhaltesystem fixiert wird. Im Anschluss wird der Niederhalter, welcher die Elektrode in der ehemals obersten Position fixiert hat, aus dem Zellstapel gezogen. An dieser Stelle wird eine Relativbewegung zwischen der Elektrodenkante und dem Niederhalter durchgeführt. Durch einen Wirbelstromsensor, der sich in dem Niederhaltesystem befindet, kann die Elektrodenkante auf einfache Art und Weise detektiert werden und die Elektrode positionsgenau übergeben werden.

Alternativ kann die Sensoranordnung auch in eine Maschinenkomponente zur Herstellung eines Zellstapels, insbesondere in einen Greifer integriert werden. Dabei ist der Greifer, vorzugsweise ein Vakuumflächensauggreifer, dazu eingerichtet, eine Elektrode auf dem Zellstapel abzulegen. Dabei führt der Greifer eine Relativbewegung gegenüber dem Zellstapel aus. So kann der Greifer beispielsweise eine Bewegung in X-Richtung ausführen und der Stapeltisch eine Bewegung in Y-Richtung. Die Lage der Elektrode in X- und Y-Richtung kann dabei durch den Wirbelstromsensor in dem Greifer detektiert werden und die Elektrode positionsgenau übergeben werden. Alternativ zu einem Greifer kann die Sensoranordnung auch in ein Förderband oder ein Stapelrad zur Herstellung eines Zellstapels integriert werden, um die Positionen der Elektroden bei der Herstellung des Zellstapels zu erfassen und somit die Herstellung des Zellstapels zu verbessern und/oder zu beschleunigen.

Die verschiedenen, in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung zur Verdeutlichung des erfindungsgemäßen Verfahrens zum Detektieren einer Kante einer Elektrode;
- Figur 2: eine bevorzugte Anordnung von Wirbelstromsensoren in einer Sensoranordnung zur Erkennung von Kanten einer Elektrode;
- Figur 3: eine weitere bevorzugte Anordnung von Wirbelstromsensoren in einer Sensoranordnung zur Erkennung von Kanten einer Elektrode;
- Figur 4: eine schematische Darstellung zur Kantenerkennung bei zwei übereinander gestapelten Elektroden;
- Figur 5: eine schematische Darstellung zur Erfassung der Kanten von zwei übereinandern gestapelten Elektroden bei der Herstellung eines Zellstapels für eine Batteriezelle;
- Figur 6: ein Array von Wirbelstromsensoren zur Erfassung von zwei senkrecht zueinander verlaufenden Kanten einer Elektrode;
- Figur 7: ein Array in einer Matrixanordnung und ein Array in einer Sternanordnung zur Erfassung von zwei senkrecht zueinander verlaufenden Kanten einer Elektrode; und
- Figur 8: eine schematische Darstellung zur Erfassung von einer Kante bei zwei aufeinander gestapelten Baugruppen zur Herstellung eines Zellstapels für eine Batteriezelle.

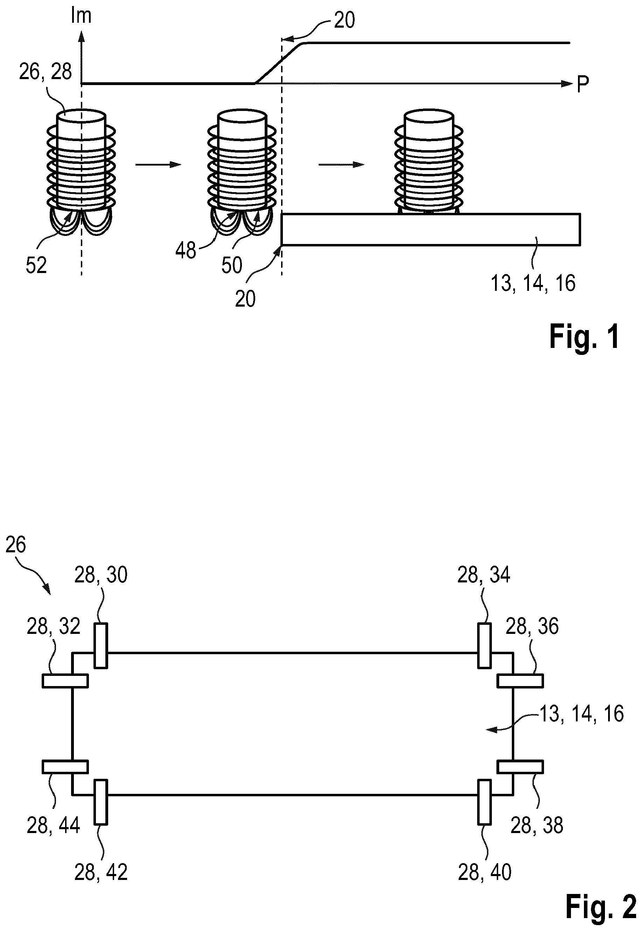

Figur 1 zeigt eine Änderung der Impedanz Im bei der Verschiebung einer Sensoranordnung 26, welche zumindest einen Wirbelstromsensor 28 umfasst, über eine Elektrode 13. Die Elektrode 13 kann als Anode 14 oder als Kathode 16 ausgeführt sein. Der Wirbelstromsensor 28 weist einen Sensorkopf 52 mit einer Sendeeinheit 48 und einer Empfangseinheit 50 auf. Bei einem Überfahren der Kante 20 an der Elektrode 13 kommt es zu einem Anstieg der Impedanz. Für eine Wirbelstromprüfung muss die Elektrode 13 elektrisch leitend sein. Ein primäres Magnetfeld, welches durch einen Wechselstrom in einer Quellspule des Wirbelstromsensors 28 erzeugt wird, induziert in der Elektrode 13 einen Strom. Dieser Wirbelstrom in der Elektrode 13 erzeugt wiederum ein magnetisches Feld, welches dem primären Magnetfeld des Wirbelstromsensors 28 entgegenwirkt. Daraus resultiert eine Schwächung des Primärfeldes des Wirbelstromsensors 28. Das aus der Differenz resultierende magnetische Feld erzeugt wiederum in einer Sensorspule des Wirbelstromsensors 28 einen elektrischen Strom. Das Prüfergebnis basiert auf der Analyse des komplexen Wechselstromwiderstands (Impedanz), der abhängig von der Wechselstromfrequenz der Quellspule, den geometrischen, elektrischen und magnetischen Eigenschaften der Elektrode 13 und der Messanordnung ist. Die Impedanz berechnet sich aus dem Imaginär- und Realteil des Widerstands. Dieses Prüfverfahren ist somit für die Anode 14 und die Kathode 16 zielführend. Wird ein Wirbelstromsensor 28 über die Elektrodenkante 20 geführt, kann diese sehr deutlich durch dieses Wirkprinzip detektiert werden.

In Figur 2 ist eine bevorzugte Sensoranordnung 26 zur Kantenerkennung einer Elektrode 13 dargestellt. Die Sensoranordnung 26 umfasst einen ersten Sensor 30 und einen zweiten Sensor 32, welche orthogonal zueinander angeordnet sind und ein erstes Sensorpaar zur Erfassung zweier orthogonal zueinander verlaufender Kanten 20 einer Elektrode 13 ausbilden. Die Sensoranordnung 26 umfasst ferner einen dritten Sensor 34 und einen vierten Sensor 36, welche orthogonal zueinander angeordnet sind und ein zweites Sensorpaar zur Erfassung zweier orthogonal zueinander verlaufender Kanten 20 einer Elektrode 13 ausbilden. Die Sensoranordnung 26 umfasst ferner einen fünften Sensor 38 und einen sechsten Sensor 40, welche orthogonal zueinander angeordnet sind und ein drittes Sensorpaar zur Erfassung zweier orthogonal zueinander verlaufender Kanten 20 einer Elektrode 13 ausbilden. Die Sensoranordnung 26 umfasst ferner einen siebten Sensor 42 und einen achten Sensor 44, welche orthogonal zueinander angeordnet sind und ein viertes Sensorpaar zur Erfassung zweier orthogonal zueinander verlaufender Kanten 20 einer Elektrode 13 ausbilden. Jedes Sensorpaar ist dabei jeweils einer Ecke der Elektrode 13 zugeordnet, um möglichst exakt eine Position der Elektrode 13 zu erfassen. Sämtliche Sensoren 30, 32, 34, 36, 38, 40, 42, 44 sind als Wirbelstromsensoren 28 ausgeführt. Aufgrund der durch die Sensoren der Sensoreinheit 26 erfassten Lage der Kanten 20 können die Länge, Breite und Höhe der Elektrode 13 bestimmt werden. Ferner können Winkel zwischen den Seiten sowie der Schwerpunkt der Elektrode 13 sowie gegebenenfalls weitere geometrische Daten berechnet werden.

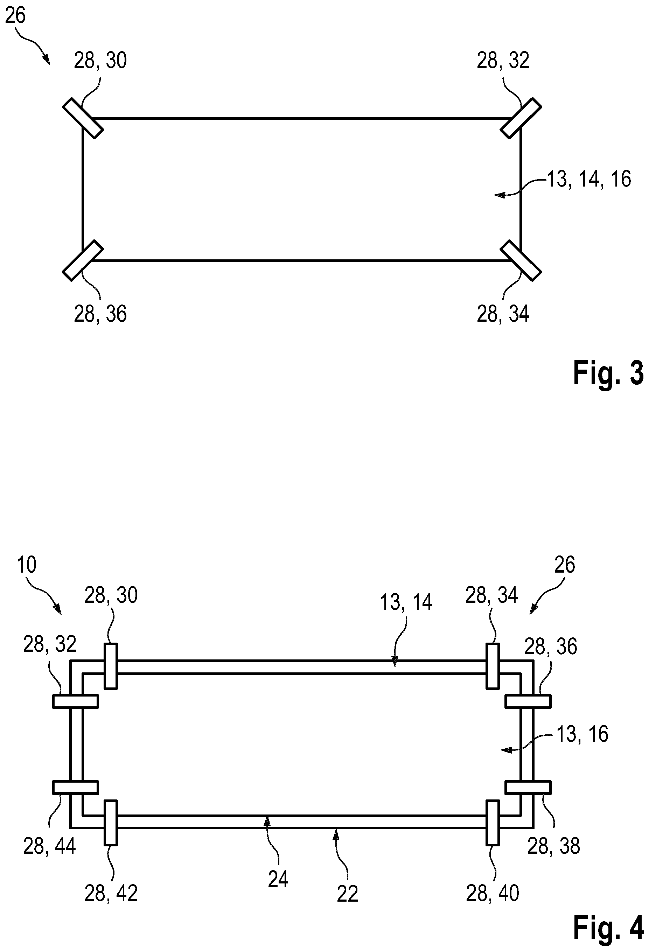

In Figur 3 ist eine alternative Sensoranordnung 26 zur Kantenerkennung einer Elektrode 13 dargestellt. Die in Figur 3 dargestellte Sensoranordnung 26 umfasst vier Wirbelstromsensoren 28, 30, 32, 34, 36, wobei jeder der Sensoren 30, 32, 34, 36 jeweils einer Ecke der Elektrode 13 zugeordnet ist. Gegenüber dem in Figur 2 dargestellten Ausführungsbeispiel ist diese Sensoranordnung durch weniger Sensoren günstiger. Auch wenn die Messgenauigkeit gegenüber dem in Figur 2 dargestellten Ausführungsbeispiel geringer ist, so ist die Sensoranordnung geeignet, die Kanten 20 der Elektrode 13 mit hoher Genauigkeit zu erfassen und somit eine exakte Positionierung der Elektrode 13 bei der Herstellung eines Zellstapels zu ermöglichen.

In Figur 4 ist schematisch ein Zellstapel 10 dargestellt, welcher eine erste Elektrode 13, insbesondere eine Anode 14 und eine zweite Elektrode, insbesondere eine Kathode 16 umfasst. Durch die in Figur 2 beschriebene Sensoranordnung 26 können sowohl eine Anodenkante 22 als auch eine Kathodenkante 24 ermittelt werden, selbst wenn eine der Elektroden 13 durch einen Separator verdeckt ist und durch ein Kamerasystem nicht erfasst werden könnte.

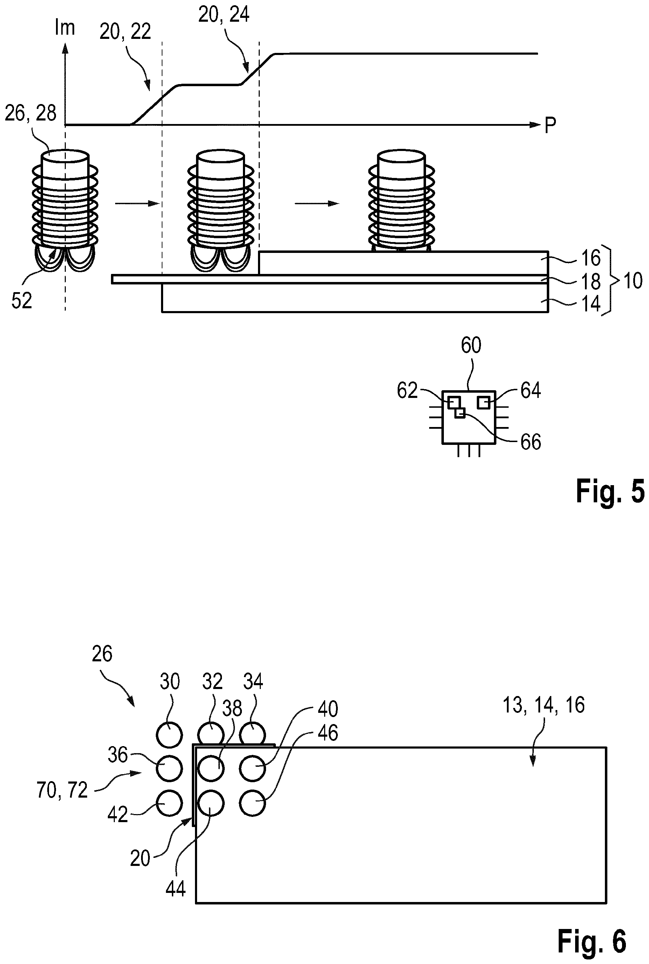

In Figur 5 ist die Vermessung eines Zellstapels 10 mit einer erfindungsgemäßen Vorrichtung zum Detektieren einer Kante 20 einer Elektrode 13 bei der Herstellung eines Zellstapels 10 dargestellt. Die Vorrichtung umfasst eine Sensoreinheit 26 mit mindestens einem Wirbelstromsensor 28 sowie ein Steuergerät 60 mit einer Speichereinheit 62 und einer Recheneinheit 64. In der Speichereinheit 62 ist ein maschinenlesbarer Programmcode 66 abgelegt, welcher dazu beiträgt, ein erfindungsgemäßes Verfahren zum Detektieren einer Kante 20 einer Elektrode 13 bei der Herstellung eines Zellstapels 10 für eine Batteriezelle durchzuführen, wenn der maschinenlesbare Programmcode 66 durch die Recheneinheit 64 des Steuergeräts 60 ausgeführt wird. Dabei wird der Wirbelstromsensor 28 mit seinem Sensorkopf 52 in Zeichnungsebene von links nach rechts über den Zellstapel 10 verschoben. Der Zellstapel 10 umfasst eine Anode 14 und eine Kathode 16, welche durch einen Separator 18 elektrisch voneinander getrennt sind. Beim Überfahren der Anodenkante 22 kommt es zu einem ersten Anstieg der Impedanz und beim Überfahren der Kathodenkante 24 zu einem weiteren Anstieg der Impedanz. Somit können die Lage der Anodenkante 22 und der Kathodenkante 24 und somit die Positionen der Anode 14 und der Kathode 16 bestimmt werden.

In Figur 6 ist ein Array 70 aus den Sensoren 30, 32, 34, 36, 38, 40, 42, 44, 46 zur Erfassung von zwei Kanten 20 an einer Ecke einer Elektrode 13 dargestellt. Die Sensoren sind vorzugsweise als Wirbelstromsensoren 28 ausgeführt. Allerdings können die Sendeeinheit 48 , d.h. die Einheit, die ein entsprechendes Magnetfeld erzeugt und die Empfangseinheit 50, d.h. die Einheit, welche eine entsprechende Reaktion des erzeugten Magnetfelds der Sendeeinheit 48 in Interaktion mit der Elektrode 13 zeigt, auch räumlich getrennt voneinander sein. Die Sensoren können in unterschiedlicher Reihenfolge mit Strom durchflossen werden und dienen zu unterschiedlichen Zeiten als Sender oder Empfänger. Ein Vorteil in der Verwendung eines Arrays 70 liegt vor allem darin , dass eine Detektion der Kante 20 der Elektrode 13 auch ohne eine Relativbewegung möglich ist. Da keine Relativbewegung nötig ist, können die Arrays 70 sehr gut in einen Greifer der Vorrichtung integriert werden. Die Position der Elektrode 13 am Greifer kann während des Handlings oder zum Zeitpunkt der finalen Ablage der Elektrode 13 auf dem Zellstapel 10 bestimmt werden. Ein Array 70 kann ebenso in ein Niederhaltesystem für die Herstellung eines Zellstapels 10 integriert werden. Durch die fehlende Relativbewegung sind vergleichsweise lange Messzeiten bei der Erfassung der Kante 20 der Elektrode 13 möglich, wodurch die Messgenauigkeit erhöht werden kann.

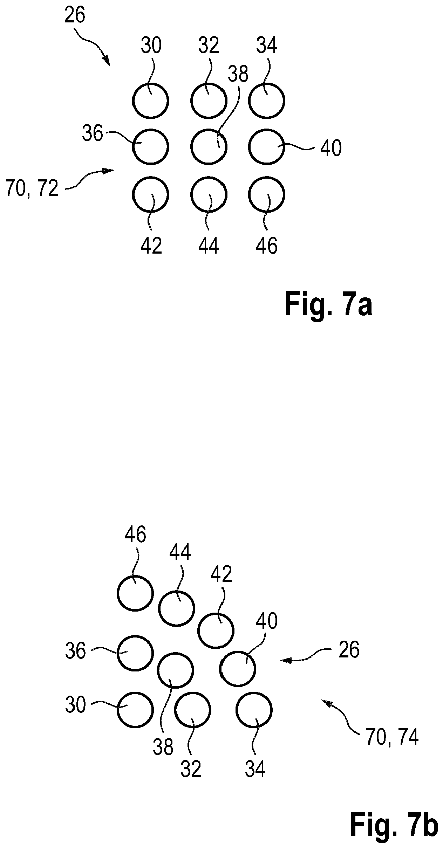

In Figur 7 sind zwei Formen von Arrays 70 zur Erfassung von Kanten 20 an einer Elektrode 13 dargestellt. In Figur 7a ist ein Array 70 in einer Matrixanordnung 72 dargestellt, welche als 3 x 3 Matrix ausgebildet ist und neun Sensoren 30, 32, 34, 36, 38, 40, 42, 44, 46 umfasst. Die Sensoren weisen dabei vorzugsweise gleiche Abstände zueinander auf, sodass die Lage der Kante 20 der Elektrode entsprechende Auswirkungen auf die Messsignale der Sensoren aufweist, wodurch die Position der Kante 20 der Elektrode detektiert werden kann.

In Figur 7b ist ein alternatives Ausführungsbeispiel für ein Array 70 dargestellt. In diesem Ausführungsbeispiel sind die Sensoren 30, 32, 34, 36, 38, 40, 42, 44, 46 in einer Sternanordnung 74 angeordnet, wobei die Sensoren ausgehend von dem ersten Sensor 30 strahlenförmig angeordnet sind. Ein solche Anordnung ermöglicht ebenfalls eine exakte Detektion der Kante 20 der Elektrode 13.

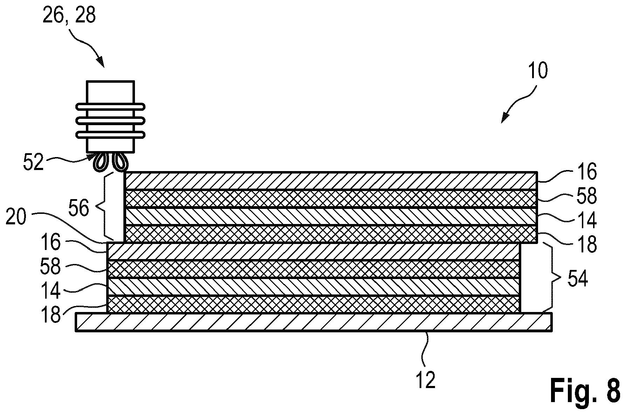

In Figur 8 ist ein weiterer Zellstapel 10 dargestellt, welcher durch eine Sensoranordnung 26 mit einem Wirbelstromsensor 28 vermessen wird. Dazu ist ein Trägerelement 12 vorgesehen, auf welchem der Zellstapel 10 errichtet wird. Anstelle von einzelnen Elektroden 13 werden in dem in Figur 8 dargestellten Zellstapel 10 zwei Baugruppen 54, 56 aufeinander gestapelt, welche jeweils eine Anode 14 und eine Kathode 16 umfassen, wobei die Anoden 14 und die Kathoden 16 durch einen ersten Separator 18 und einen zweiten Separator 58 elektrisch voneinander getrennt sind. Eine solche Baugruppe 54, 56 wird auch als Monozelle 76 bezeichnet, da sie die kleinste elektrisch funktionsfähige Einheit ausbildet. Auch beim Stapeln solcher Baugruppen 54, 56 ist das vorgeschlagene Verfahren geeignet, um entsprechende Kanten 20 an den Baugruppen 54, 56 zu erkennen und somit eine möglichst exakte und positionsgenaue Stapelung dieser Baugruppen 54, 56 zu einem Zellstapel 10 zu ermöglichen. Die aufgenommenen Positionen sämtlicher Elektroden 13, 14, 16 oder Baugruppen 54, 56 eines Zellstapels 10 können dazu genutzt werden, um die relative Ausrichtung aller Elektroden 13, 14, 16 oder Baugruppen 54, 56 eines Zellstapels 10 zu prüfen. Für einen fertigen Zellstapel 10 müssen die Positionen alle Elektroden 13, 14, 16 oder Baugruppen 54, 56 in einem definierten Toleranzbereich liegen. Mit dem vorgeschlagenen Verfahren kann somit die Lage der Elektroden 13, 14, 16 oder Baugruppen 54, 56 zueinander verbessert werden. Wird das Toleranzkriterium für die Lage der Elektroden 13, 14, 16 oder Baugruppen 54, 56 für den Zellstapel 10 nicht erfüllt, so wird der Zellstapel 10 als Ausschuss identifiziert und aus dem Herstellungsprozess ausgeschleust.

### Bezugszeichenliste

- 10: Zellstapel
- 12: Trägerelement
- 13: Elektrode
- 14: Anode
- 16: Kathode
- 18: Separator

- 20: Kante
- 22: Anodenkante
- 24: Kathodenkante
- 26: Sensoranordnung
- 28: Wirbelstromsensor

- 30: erster Sensor
- 32: zweiter Sensor
- 34: dritter Sensor
- 36: vierter Sensor
- 38: fünfter Sensor

- 40: sechster Sensor
- 42: siebter Sensor
- 44: achter Sensor
- 46: neunter Sensor
- 48: Sendeeinheit

- 50: Empfangseinheit
- 52: Sensorkopf
- 54: erste Baugruppe
- 56: zweite Baugruppe
- 58: zweiter Separator
- 60: Steuergerät
- 62: Speichereinheit
- 64: Recheneinheit
- 66: maschinenlesbarer Programmcode

- 70: Array
- 72: Matrixanordnung
- 74: Sternanordnung
- 76: Monozelle

## Patentansprüche

1. Verfahren zum Detektieren einer Kante (20) einer Elektrode (13, 14, 16) oder eines Elektrodenbandes bei der Herstellung eines Zellstapels (10) oder Zellwickels für eine Batteriezelle, umfassend folgende Schritte:
- Positionieren einer ersten Elektrode (13, 14, 16), einer ersten Baugruppe (54), welche mindestens eine erste Elektrode (13, 14, 16) umfasst oder eines Elektrodenbandes, auf einem Trägerelement (12) zum Aufbau eines Zellstapels (10) oder eines Zellwickels für eine Batteriezelle,
- Erfassen zumindest einer Kante (20) der Elektrode (13, 14, 16) durch eine zerstörungsfreie Prüfung mittels eines Wirbelstromsensors (28), wobei durch einen Anstieg der Impedanz (Im) beim Erfassen der Kante (20) eine Position der ersten Elektrode (13, 14, 16), der ersten Baugruppe (54) oder des Elektrodenbandes bestimmt wird.

2. Verfahren nach Anspruch 1, **dadurch gekennzeichnet, dass** eine zweite Elektrode (13, 14, 16) auf die erste Elektrode (13, 14, 16) oder eine zweite Baugruppe (56), welche mindestens eine zweite Elektrode (13, 14, 16) umfasst, auf die erste Baugruppe (54) gelegt wird und eine erste Kante (20, 22) an der ersten Elektrode (13, 14, 16) oder der ersten Baugruppe (54) und eine zweite Kante (20, 24) an der zweiten Elektrode (13, 14, 16) oder der zweiten Baugruppe (56) erfasst werden, wobei aus den bestimmten Positionen der erfassten Kanten (20, 22, 24) eine relative Position der ersten Elektrode (13, 14, 16) zur zweiten Elektrode (13, 14, 16) oder der ersten Baugruppe (54) zur zweiten Baugruppe (56) bestimmt wird.

3. Verfahren nach Anspruch 2, **dadurch gekennzeichnet, dass** zwischen der ersten Elektrode (13, 14, 16) und der zweiten Elektrode (13, 14, 16) oder zwischen der ersten Baugruppe (54) und der zweiten Baugruppe (56) ein Separator (18) angeordnet wird.

4. Vorrichtung zum Detektieren einer Kante (20) einer Elektrode (13, 14, 16) oder eines Elektrodenbandes bei der Herstellung eines Zellstapels (10) für eine Batteriezelle, umfassend mindestens eine Sensoranordnung (26) mit mindestens einem Wirbelstromsensor (28) zum Detektieren einer Kante (20) einer Elektrode (13, 14, 16), einer ersten Baugruppe (54), welche mindestens eine erste Elektrode (13, 14, 16) umfasst oder eines Elektrodenbandes, sowie mit einem Steuergerät (60) mit einer Speichereinheit (62) und einer Recheneinheit (64) sowie einem in der Speichereinheit (62) abgelegten, maschinenlesbaren Programmcode (66), wobei das Steuergerät (60) dazu eingerichtet ist, ein Verfahren nach einem der Ansprüche 1 bis 3 durchzuführen, wenn der maschinenlesbare Programmcode (66) durch die Recheneinheit (64) ausgeführt wird.

5. Vorrichtung nach Anspruch 4, **dadurch gekennzeichnet, dass** die Sensoranordnung (26) eine Mehrzahl an Wirbelstromsensoren (28) zur Erfassung mindestens zweier Kanten (20) der Elektrode (13, 14, 16), der ersten Baugruppe (54) oder des Elektrodenbandes umfasst.

6. Vorrichtung nach Anspruch 4 oder 5, **dadurch gekennzeichnet, dass** die Sensoranordnung (26) vier Wirbelstromsensoren (28, 30, 32, 34, 36) umfasst, wobei die Wirbelstromsensoren (28, 30, 32, 34, 36) derart angeordnet sind, dass sie zumindest die Eckpunkte der Elektrode (13, 14, 16), der ersten Baugruppe (54) oder des Elektrodenbandes erfassen.

7. Vorrichtung nach Anspruch 4 oder 5, **dadurch gekennzeichnet, dass** die Sensoranordnung (26) acht Wirbelstromsensoren (28, 30, 32, 34, 36, 38, 40, 42, 44) umfasst, wobei die acht Wirbelstromsensoren (28, 30, 32, 34, 36, 38, 40, 42, 44) jeweils vier Sensor-Paarungen ausbilden, wobei jede Sensor-Paarung einen ersten Sensor zur Erfassung einer ersten Kante (20) und einen zweiten Sensor zur Erfassung einer senkrecht zur ersten Kante (20) verlaufenden zweiten Kante (20) aufweist.

8. Vorrichtung nach einem der Ansprüche 4 bis 7, **dadurch gekennzeichnet, dass** die Sensoranordnung (26) relativ zu der Elektrode (13, 14, 16) oder relativ zu der Baugruppe (54) verschiebbar ist.

9. Vorrichtung nach einem der Ansprüche 4 bis 8, **dadurch gekennzeichnet, dass** die Sensoranordnung (26) ein Array (70) mit mehreren Wirbelstromsensoren (28, 30, 32, 34, 36, 38, 40, 42, 44, 46) umfasst.

10. Vorrichtung nach Anspruch 9, **dadurch gekennzeichnet, dass** die Wirbelstromsensoren (28, 30, 32, 34, 36, 38, 40, 42, 44, 46) des Arrays (70) in einer Matrixanordnung (72) oder in einer Sternanordnung (74) angeordnet sind.
